# EUROPÄISCHE PATENTSCHRIFT

(11) **EP 3 881 923 B1**
(45) Veröffentlichungstag und Bekanntmachung des Hinweises auf die Patenterteilung: **13.12.2023**
(21) Anmeldenummer: 21156773.0
(22) Anmeldetag: 12.02.2021
(51) Int. Cl.: B01D 46/00, B01D 46/10, B01D 46/42, B01D 46/52

(54) **AEROSOLABSCHEIDER SOWIE VERFAHREN ZUM EINBAU EINES KOALESZENZ-FILTERELEMENTES IN EINEN AEROSOLABSCHEIDER**
AEROSOL SEPARATOR AND METHOD FOR INSTALLING A COALESCENCE FILTER ELEMENT IN AN AEROSOL SEPARATOR
SÉPARATEUR D'AÉROSOL, AINSI QUE PROCÉDÉ D'INSTALLATION D'UN ÉLÉMENT DE FILTRE À COALESCENCE DANS UN SÉPARATEUR D'AÉROSOL

(30) Priorität: 17.03.2020 DE 102020107345
(43) Veröffentlichungstag der Anmeldung: 22.09.2021
(73) Patentinhaber: MANN+HUMMEL LIFE SCIENCES & ENVIRONMENT HOLDING SINGAPORE PTE. LTD., Singapore 139234 (SG)
(72) Erfinder: MÜNKEL, Karlheinz, 75038 Oberderdingen-Flehingen (DE); POWER, Joseph, 70734 Fellbach (DE)
(74) Vertreter: Mann + Hummel Intellectual Property

(56) Entgegenhaltungen:
- DE-A1- 2 813 691
- DE-A1- 19 837 775
- DE-U- 1 872 009
- US-A1- 2008 216 455

## Beschreibung

### Technisches Gebiet

Die Erfindung betrifft einen Aerosolabscheider nach dem Oberbegriff des Anspruchs 1. Die Erfindung betrifft des Weiteren ein Verfahren nach dem Oberbegriff des Anspruchs 12. Der Aerosolabscheider ist ausgebildet zum Abscheiden von Aerosolpartikeln, insbesondere von Ölpartikeln, etwa von Kühlschmiermittelpartikeln oder von Trennmitteldämpfen, aus Gas, vorzugsweise aus Luft, insbesondere aus der Raumluft eines Bearbeitungsraums mindestens einer Fertigungsmaschine, beispielsweise mindestens einer zerspanenden Fertigungsmaschine, etwa mindestens einer mit einem elektronischen Verfahren gesteuerten Fertigungsmaschine, z.B. eines C[omputerized]N[umerical]-C[ontrol]-Fertigungszentrums.

### Stand der Technik

Bei zerspanenden Fertigungsmaschinen wird beim Abtragen von Material Kühlschmiermittel auf die Schneide aufgebracht. Dieses Kühlschmiermittel verdampft an der Schneide oder wird durch die Drehbewegungen der Schneide zerstäubt, wobei ein feiner Flüssigkeitsnebel, ein Aerosol, entsteht. Des Weiteren kann bei der Bearbeitung mit Fertigungsmaschinen ein Trennmitteldämpfe aufweisendes Aerosol entstehen, wenn beispielsweise Trennmittel in die offenen Formhälften von Blasformteilen, sog. Blowmoldingwerkzeuge, eingesprüht werden.

Dieses Aerosol ist gesundheitsgefährdend für die Anwender, welche die Fertigungsmaschinen bedienen, da die feinen Partikel lungengängig sein können. Zudem führt ein freier Austritt von Aerosol zur Verschmutzung der Umgebung und steigert das Unfallrisiko, da der sich absetzende Flüssigkeitsnebel auf Oberflächen, wie etwa Fußböden, einen schmierigen Film bildet. Dieser Film kann sich auch auf den bearbeiteten Bauteilen bilden, die dadurch wieder verschmutzen können, was zu zusätzlichem Reinigungsaufwand führen kann.

Damit die Aerosolpartikel nicht unkontrolliert aus dem Bearbeitungsraum austreten und Menschen, Umwelt und Anlagen geschützt sind, werden die Bearbeitungsräume von Fertigungsmaschinen abgesaugt, sozusagen evakuiert. Zum Abscheiden der Aerosolpartikel aus der abgesaugten Abluft dienen Aerosolabscheider.

Ein Aerosolabscheider gemäß dem Oberbegriff des Anspruchs 1 ist aus der WO2001/014521A1 bekannt. Dieser Aerosolabscheider weist mehrere turmartig übereinander angeordnete Gehäusekästenmodule auf. In mindestens einem der Gehäusemodule ist ein austauschbares Koaleszenz-Filterelement angeordnet. Um dieses Koaleszenz-Filterelement axial dichtend im Gehäusemodul anzuordnen, weist das Gehäusemodul einen Rampenaxialmechanismus auf. Dabei ist das Koaleszenz-Filterelement auf einer rahmenartigen Auflagefläche des Gehäusebodens gelagert. Um das Koaleszenz-Filterelementauf der Auflagefläche bewegen zu können, weist dieser einen Rollmechanismus auf. L-förmige Schienen sind derart ausgebildet, dass in der Gebrauchsstellung des Aerosolabscheiders die Abdeckung der Gehäuseöffnung die L-förmigen Schienen in Richtung zur von der Gehäuseöffnung abgewandten Gehäuserückwand drückt, wodurch diese sich verformen und das Koaleszenz-Filterelement derart auf die rahmenartige Auflagefläche des Gehäusebodens drücken, dass das Koaleszenz-Filterelement auch im Falle eines im Gehäuse anliegenden Unterdrucks dichtend am Gehäuseboden angeordnet ist (Seite 9, Zeile 18, bis Seite 10, Zeile 14, sowie Figuren 5, 7 der WO2001/014521A1). Der am Koaleszenz-Filterelement angeordnete Rollmechanismus ermöglicht dabei eine horizontale Bewegung des Koaleszenz-Filterelements im Gehäuse.

Des Weiteren ist aus DE112007002845B4 ein Luftfilter mit einem auswechselbaren Filtereinsatz bekannt, wobei der Filtereinsatz mittels eines Rampenaxialmechanismus im Gehäuse verspannt wird. Dabei liegt in einer Gebrauchsposition oder Endposition des Filtereinsatzes dieses Luftfilters durch ein Zusammenwirken von Stegabschnitten einer Gehäuseöffnungsabdeckung mit Stegabschnitten von Gehäuseseitenwänden eine gleichmäßige Beaufschlagung eines Dichtungsflansches des Filtereinsatzes vor (Anspruch 1, Absatz [0042] sowie Figur 1 der DE112007002845B4). Der aus der DE1 12007002845B4 bekannte Luftfilter dient zum Reinigen der Rohluft einer Luftansauganlage eines Verbrennungsmotors. Aus US 2008/216455 A1 ist ein Aerosolabscheider für ein Koaleszenz-Filterelement bekannt wobei das Filterelement durch eine Öffnung an einem Gehäuse angebracht und von diesem gelöst wird, und ein Dichtungsabschnitt des Filterelements mit einem Dichtungsabschnitt des Gehäuses in einem Zustand verbunden ist, in dem der Filter in dem Gehäuse installiert ist.

Des Weiteren ist aus einer von MANN+HUMMEL GmbH veröffentlichten Bedienungsanleitung (Stand 01/2018) für den Ölnebelabscheider ScandFilter100R Gen2.5 ein Aerosolabscheider bekannt, der zum Abscheiden von Aerosolpartikeln aus der Raumluft eines Bearbeitungsraums einer zerspanenden Fertigungsmaschine ausgebildet ist. Bei diesem Aerosolabscheider ist ein Koaleszenz-Filterelement mittels eines Hebelsystems axial dichtend im Gehäuse verspannbar. Zum Einbau des Koaleszenz-Filterelements wird die Filterkassette in horizontaler Richtung in das Gehäuse eingeschoben und anschließend mittels des Hebelsystems in axialer Richtung nach oben hochgehoben. Der Ausbau erfolgt in umgekehrter Reihenfolge. Beim Einbau muss darauf geachtet werden, die Entriegelungshebel korrekt zu schließen, damit das Koaleszenz-Filterelement dichtend im Gehäuse verspannt ist.

Der Erfindung liegt die Aufgabe zugrunde, einen Aerosolabscheider der eingangs genannten Art sowie ein Verfahren der eingangs genannten Art derart weiterzuentwickeln, dass die Funktion des Aerosolabscheiders optimiert und die Kosten für die Herstellung sowie für die Wartung des Aerosolabscheiders reduziert werden. Vor allem soll der Ein- und Ausbau des Koaleszenz-Filterelements, vereinfacht werden.

### Offenbarung der Erfindung

Diese Aufgabe wird durch einen Aerosolabscheider mit den im Anspruch 1 angegebenen Merkmalen sowie durch ein Verfahren mit den im Anspruch 12 angegebenen Merkmalen gelöst. Vorteilhafte Ausgestaltungen und zweckmäßige Weiterbildungen der vorliegenden Erfindung sind in den jeweiligen abhängigen Ansprüchen gekennzeichnet.

Mithin basiert die vorliegende Erfindung darauf, das Koaleszenz-Filterelement im Gehäuse auf einem bewegbaren, insbesondere verschiebbaren, ausziehbaren oder fahrbaren, Schubladenelement anzuordnen, wobei das Koaleszenz-Filterelement durch die Bewegung des Schubladenelements von einer Austauschposition oder Wartungsposition in eine Gebrauchsposition bewegbar ist und umgekehrt. In der Gebrauchsposition ist das Koaleszenz-Filterelement verrutschsicher sowie vorteilhafterweise auch dichtend, insbesondere axial dichtend, im Gehäuse verspannt. In der Wartungsposition ist das Koaleszenz-Filterelement spannungsfrei oder lose im Gehäuse angeordnet. So ist das Koaleszenz-Filterelement in der Wartungsposition im Wesentlichen gleitreibungsfrei, beispielsweise von Hand, also aus dem Gehäuse ziehbar.

Insbesondere basiert die vorliegende Erfindung darauf, die Bedienungsfunktion des Bewegens des Koaleszenz-Filterelements von der Wartungsposition in die Gebrauchsposition mit dem Schließen der Abdeckung zu kombinieren. Vorteilhafterweise ist hierzu das Schubladenelement dazu ausgebildet, derart mit der Abdeckung zusammenzuwirken, dass durch Öffnen der Abdeckung die Auflagefläche in die Wartungsposition und durch Schließen der Abdeckung die Auflagefläche in die Gebrauchsposition bewegbar ist. Bei diesem Ausführungsbeispiel erfolgt somit das Einschieben des Schubladenelements in das Gehäuse zwingend beim Schließen der Gehäusetür. Dabei drückt die Gehäusetür das Schubladenelement in die Gebrauchsposition.

Zum Führen der Bewegung des Schubladenelements von der Gebrauchsposition in die Wartungsposition und umgekehrt weist der Aerosolabscheider mindestens ein Führungselement auf. Das Führungselement ist dazu ausgebildet, das Schubladenelement sowohl in mindestens eine senkrecht zur Gehäuseachse bzw. senkrecht zur Durchströmrichtung angeordnete horizontale Richtung zu führen, als auch gleichzeitig in mindestens eine parallel zur Gehäuseachse bzw. parallel zur Durchströmrichtung angeordnete axiale Richtung zu führen.

Insbesondere kann das Führungselement eine Führungsschiene mit mindestens einem Höhenprofil sein. Beispielsweise kann die Führungsschiene als Rampenkontur ausgebildet sein oder mindestens eine Rampenkontur aufweisen. Die Rampenkontur ermöglicht, dass beim Schließen der Abdeckung das Koaleszenz-Filterelement mittels einer Rampenaxialbewegung in die Gebrauchsposition bewegbar ist.

Bei einem vorteilhaften Ausführungsbeispiel der vorliegenden Erfindung erstreckt sich im offenen Zustand der Gehäuseöffnung das Schubladenelement durch die Gehäuseöffnung und ragt bereichsweise aus dem Gehäuse heraus. Die Abdeckung und das Schubladenelement sind dazu ausgelegt, derart zusammenzuwirken, dass beim Schließen der Abdeckung diese gegen das Schubladenelement drückt, wobei durch den von der Abdeckung ausgeübten Druck das Schubladenelement vollständig in das Gehäuse hinein bewegbar und dabei das Koaleszenz-Filterelement in die Gebrauchsposition bewegbar ist.

Mit anderen Worten drückt die Abdeckung, wenn sie geschlossen wird, auf die der Gehäuseöffnung zugewandte Kante des Schubladenelements und zwingt das Schubladenelement auf dem Führungselement, in das Gehäuse hineinzufahren, wobei das Schubladenelement sich der Durchströmungsrichtung des Koaleszenz-Filterelements folgend nach oben bewegt.

Zum Lagern des Führungselements weist bei einem vorteilhaften Ausführungsbeispiel der vorliegenden Erfindung der Aerosolabscheider mindestens eine Tragschiene auf. Besonders vorteilhafterweise weist der Aerosolabscheider zwei Tragschienen auf, die an einander gegenüberliegenden Innenseiten des Gehäuses befestigt sind. Dies erlaubt es, das Koaleszenz-Filterelement nach Art einer Schublade in das Gehäuse einzubringen.

Die Rampenkontur ist vorteilhafterweise dazu ausgebildet, das Schubladenelement sowohl in mindestens eine senkrecht zur Gehäuseachse angeordnete horizontale Richtung (X) zu führen, als auch gleichzeitig in mindestens eine parallel zur Gehäuseachse angeordnete axiale Richtung Y zu führen. Somit ermöglicht die Rampenkontur eine Rampenaxialbewegung des Schubladenelements.

Die Tür, das Schubladenelement und die Rampenkontur sind vorteilhafterweise derart zueinander angeordnet, dass beim Schließen der Tür diese das Schubladenelement auf der Rampenkontur bewegt und im geschlossenen Zustand das Schubladenelement auf der Rampenkontur hält.

Dabei kann die Rampenkontur derart ausgebildet sein, dass sich beim Öffnen der Tür das Schubladenelement der Schwerkraft folgend selbstständig von einer Gebrauchspositionstragfläche der Rampenkontur, auf welcher das Schubladenelement in der Gebrauchsposition lagert, herunter und in Richtung zu einer Wartungspositionstragfläche der Rampenkontur, auf welcher das Schubladenelement in der Wartungsposition lagert, hin bewegt. Dabei können Rampenkontur und Schubladenelement derart ausgebildet sein, dass der Schwerpunkt des Schubladenelements im Bereich der Wartungspositionstragfläche der Rampenkontur angeordnet ist.

Die Tür, das Schubladenelement und die Rampenkontur können derart zueinander angeordnet sein, dass im geöffneten Zustand der Tür diese das Schubladenelement auf der Wartungspositionstragfläche der Rampenkontur hält.

Das Führungselement, insbesondere die Rampenkontur, kann bogenkurvenförmig, beispielsweise nach Art einer räumlich gekrümmten Schiene, ausgebildet sein.

Um das Schubladenelement bewegbar, insbesondere verschiebbar, ausziehbar oder fahrbar, im Gehäuse anzuordnen, weist der Aerosolabscheider mindestens ein Bewegungsmittel auf.

Das Bewegungsmittel ist vorteilhafterweise am Schubladenelement angeordnet. Beispielsweise kann das Bewegungsmittel an Seitenrändern des Schubladenelements angeordnet sein. Die Rampenkontur ist vorteilhafterweise am Gehäuse angeordnet. Es ist aber auch möglich, das Bewegungsmittel am Gehäuse anzuordnen und die Rampenkontur am Schubladenelement anzuordnen.

Vorteilhafterweise ist das Bewegungsmittel dazu ausgebildet, das Schubladenelement fahrbar auf dem Führungselement, insbesondere auf der Rampenkontur, zu lagern. Zum Lagern des Schubladenelements im Gehäuse ist das Bewegungsmittel also an, insbesondere auf oder in, der Rampenkontur anordbar.

Das Bewegungsmittel kann beispielsweise ein Steg, Rad, Rollenlager, Gleitlager oder ein Kugellager sein. Besonders vorteilhaft an einer Kugellagerung ist, dass die Bewegung als Rollreibung erfolgt, was den Koaleszenz-Filterelementwechselvorgang vereinfacht. So kann das Koaleszenz-Filterelement nach Art einer rollengelagerten Schublade in das Gehäuse eingebracht werden.

Vorteilhafterweise trägt das Schubladenelement sowohl das Vorabscheiderelement als auch das als Hauptabscheiderelement ausgebildete Koaleszenz-Filterelement.

Unabhängig davon oder in Verbindung hiermit ist bei einer besonders vorteilhaften Ausführungsform der Erfindung das Koaleszenz-Filterelement mittels der Bewegung des Schubladenelements, insbesondere mittels der Rampenaxialbewegung des Schubladenelements, axial dichtend im Gehäuse verspannbar. Dadurch wird in der Gebrauchsposition eine axiale Abdichtung des Filterelements, insbesondere eine Trennung der Rohseite des Filterelements von der Reinseite des Filterelements, sichergestellt.

Hierzu kann das Koaleszenz-Filterelement in Gebrauchsposition beispielsweise gegen einen zum Tragen mindestens eines Nachabscheiders, insbesondere Feinfilters, ausgebildeten Träger dichten. Dieser Träger kann als Dichtrahmen ausgebildet sein und ist im Strömungsweg nach dem Koaleszenz-Filterelement angeordnet. Der Träger ist vorteilhafterweise in seiner Axialposition verschieblich. Der Träger, das Koaleszenz-Filterelement und das Schubladenelement sind vorteilhafterweise derart ausgebildet, dass der Träger abhängig von der Lage des Schubladenelements auf dem Führungselement, beispielsweise auf der Rampenkontur, in axialer Richtung (Y), also in einer parallel zur Gehäuseachse angeordneten Richtung (Y), verschiebbar ist. Dieses Ausführungsbeispiel hat gegenüber dem Stand der Technik den Vorteil, dass für die Abdichtung des Koaleszenz-Filterelements keine zusätzlichen Bauteile und keine zusätzlichen Betätigungsvorgänge durch den Bediener erforderlich sind.

Das Schubladenelement ist also vorteilhafterweise derart ausgebildet, dass durch die Bewegung des Schubladenelements von der Wartungsposition in die Gebrauchsposition das Koaleszenz-Filterelement axial dichtend zwischen dem Schubladenelement und dem in seiner Axialposition verschieblichen und zum Tragen des Feinfilters ausgebildeten Träger verspannbar ist.

Zwischen dem Träger und dem Koaleszenz-Filterelement kann ein zur Trennung der Rohseite von der Reinseite ausgebildetes Koaleszenzfilter-Dichtelement angeordnet sein. In der Gebrauchsposition des Koaleszenz-Filterelements ist das Koaleszenzfilter-Dichtelement axial dichtend zwischen dem Koaleszenz-Filterelement und dem Träger verpresst oder verspannt.

Des Weiteren kann mittels der Bewegung des Schubladenelements ein im Strömungsweg nach dem Träger angeordneter und zum Abscheiden von feinsten Partikeln, wie Rauch, Bakterien, Pollen und Sporen aus Gas, insbesondere aus Luft, ausgebildeter Feinfilter axial dichtend im Gehäuse verspannt werden. Der Feinfilter sitzt bei diesem vorteilhaften Ausführungsbeispiel in Gebrauchsposition dicht gegen den Träger. Der Feinfilter kann beispielsweise ein Schwebstofffilter, etwa ein Schwebstofffilter der Filterklasse H13 (HEPA) nach DIN-EN 1822, sein.

Um den Feinfilter axial dichtend im Gehäuse anzuordnen, kann der Aerosolabscheider ein zwischen dem Träger und dem Feinfilter angeordnetes Träger-Nachabscheider-Dichtelement und/oder ein zwischen einer im Strömungsweg nach dem Feinfilter angeordneten Abdichtfläche des Gehäuses und dem Feinfilter angeordnetes Gehäuseabdichtfläche-Nachabscheider-Dichtelement aufweisen.

Bei einem besonders vorteilhaften Ausführungsbeispiel der vorliegenden Erfindung wird also nach dem Einsetzen des Koaleszenz-Filterelements durch das Schließen der Gehäusetür sowie durch das Zusammenwirken von Gehäusetür, Schubladenelement und Rampenkontur das Koaleszenz-Filterelement zwangsweise in seine Gebrauchsstellung gebracht und gleichzeitig in Durchströmungsrichtung abgedichtet. Dabei werden keine zusätzlichen Bauteile und Betätigungsvorgänge für die Elementabdichtung benötigt. Dies ermöglicht im Vergleich zum Stand der Technik einen schnelleren und sichereren Elementwechsel, die Einsparung von Bauteilen sowie die Einsparung von Herstellungskosten sowie eine Fehlervermeidung durch eine Zwangsführung des Schubladenelements.

Vorteilhafterweise ist das Schubladenelement dazu ausgebildet, sowohl mindestens ein als Vorfilter ausgebildetes Vorabscheiderelement als auch das als Hauptfilter ausgebildete Koaleszenz-Filterelement zu tragen. Dazu kann das Schubladenelement einen zur Aufnahme des Vorabscheiderelements ausgebildeten muldenartigen Vorabscheideraufnahmebereich, insbesondere ein zur Aufnahme des Vorabscheiderelements ausgebildetes Aufnahmevolumen oder Aufnahmefach, aufweisen. Dieser Aufnahmebereich kann nach Art eines Schubladenfachs ausgebildet sein.

Die Auflagefläche für das Koaleszenz-Filterelement kann auf dem vom Rohgaseinlass abgewandten Rand des Vorabscheideraufnahmebereichs angeordnet sein. Dabei kann die Auflagefläche für das Koaleszenz-Filterelement als Trägerrahmen ausgebildet sein. Vorteilhafterweise sind das Koaleszenz-Filterelement und das Vorabscheiderelement berührungsfrei, also ohne direkten Kontakt zueinander, im Schubladenelement anordbar. Hierzu ist die Auflagefläche für das Koaleszenz-Filterelement mit zumindest geringem Abstand zu dem zur Aufnahme des Vorabscheiderelements ausgebildeten Aufnahmevolumen angeordnet, insbesondere vom zur Aufnahme des Vorabscheiderelements ausgebildeten Aufnahmevolumen abgesetzt. Dies ermöglicht es, beim Austausch des Koaleszenz-Filterelements dieses vom Schubladenelement herunterzuziehen, ohne dabei das Vorabscheiderelement mit einer Gleitreibung zu beaufschlagen. Das Vorabscheiderelement kann beispielsweise ein Drahtgestrick sein.

Unabhängig hiervon oder in Verbindung hiermit ist bei einer vorteilhaften Ausführungsform der vorliegenden Erfindung die Tür schwenkbar am Gehäuse gelagert und dazu ausgebildet, in ihrer vollständig geöffneten Stellung als Ablagefläche für das Koaleszenz-Filterelement zu dienen. Zu diesem Zweck kann die Tür ein Begrenzungselement aufweisen, das den Öffnungswinkel der Tür begrenzt. Die Drehachse, um welche die Tür schwenkbar ist, kann beispielsweise senkrecht zur Gehäuseachse angeordnet sein. Dies erlaubt es, die Tür beim Öffnen zur Bedienseite hin zu schwenken, wie bei einer Backofentür. Die Tür ist vorteilhafterweise derart ausgebildet, dass sie in ihrer geöffneten Stellung mit einer Traglast von etwa 30 Kilogramm, insbesondere 50 Kilogramm, belastbar ist.

Durch die vorstehend beschriebene Art der Anordnung der Gehäusetür wird eine Ablagefläche für das Koaleszenz-Filterelement geschaffen. Aerosolabscheider können neben einer Fertigungsmaschine oder auch auf dem Dach einer Fertigungsmaschine installiert werden. Bei auf dem Dach einer Fertigungsmaschine angeordneten Aerosolabscheidern besteht beim Austausch der Filtereinsätze die Gefahr, dass diese abstürzen. Ein beladenes Koaleszenz-Filterelement kann beispielsweise etwa 25 Kilogramm wiegen. Abstürzende Filtereinsätze stellen somit eine Unfallgefahr dar. Durch die Möglichkeit, das Koaleszenz-Filterelement auf der Tür abzulegen, sind die Absturzgefahr und somit auch die Unfallgefahr reduziert. Zudem bietet die als Ablagefläche ausgebildete Tür einen gewissen Tropfschutz, wenn das verschmutzte Koaleszenz-Filterelement entnommen wird.

Die vorliegende Erfindung betrifft schließlich die Verwendung mindestens eines Aerosolabscheiders gemäß der vorstehend dargelegten Art und/oder eines Aerosolabscheiders, dessen Koaleszenz-Filterelement nach dem Verfahren der vorstehend dargelegten Art in das Gehäuse des Aerosolabscheiders einbaubar ist, zum Reinigen der Abluft mindestens einer Fertigungsmaschine, insbesondere einer zerspanenden Fertigungsmaschine, beispielsweise mindestens einer mit einem elektronischen Verfahren gesteuerten Fertigungsmaschine, etwa eines C[omputerized]N[umerical]C[ontrol] Bearbeitungszentrums.

### Kurze Beschreibung der Zeichnungen

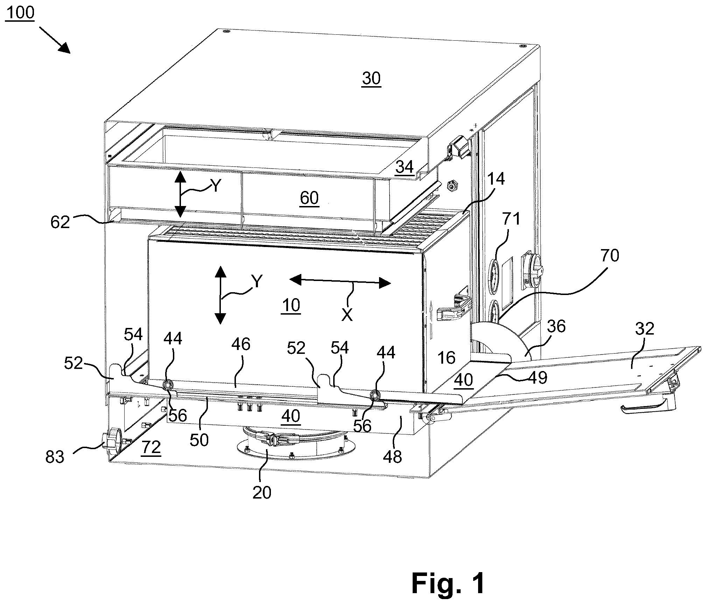

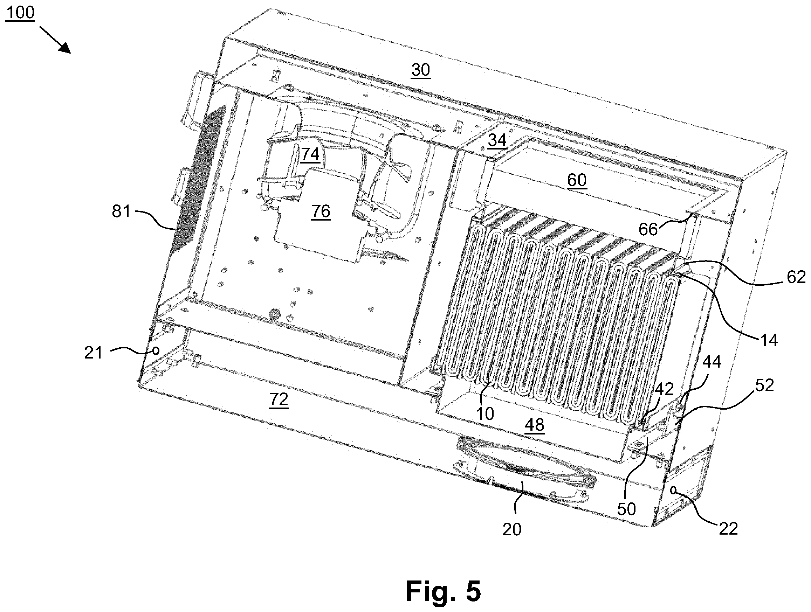

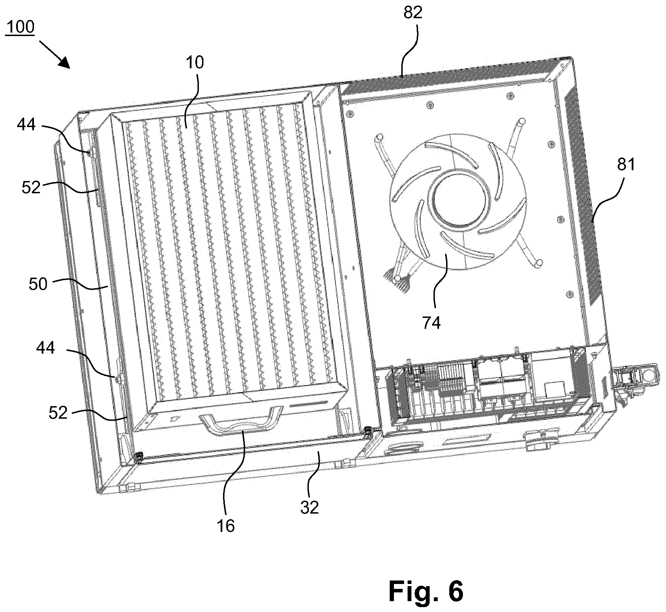

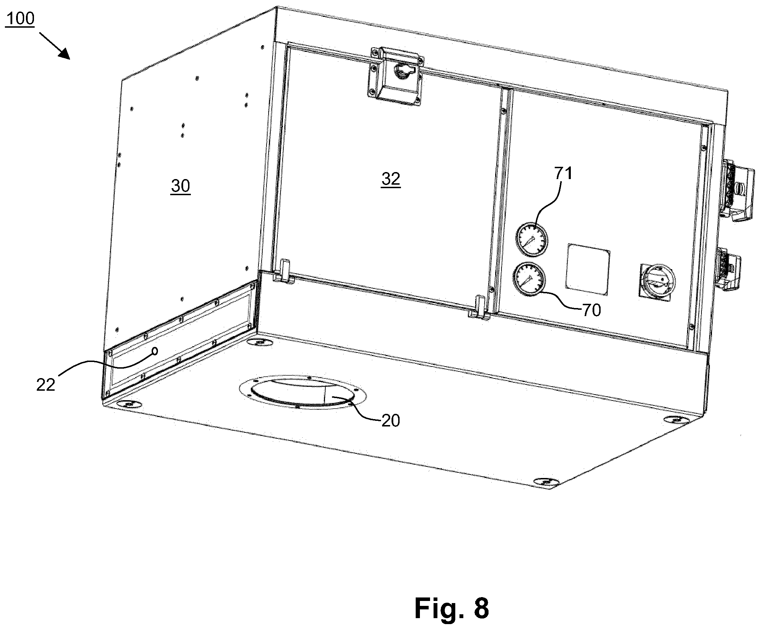

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 12 nachgeordneten Ansprüche verwiesen, andererseits werden weitere Ausgestaltungen, Merkmale und Vorteile der vorliegenden Erfindung nachstehend u.a. anhand des durch die Figuren 1 bis 8 veranschaulichten Ausführungsbeispiels näher erläutert. Es zeigt:
**Fig. 1** in Seitenansicht ein Ausführungsbeispiel für einen Aerosolabscheider gemäß der vorliegenden Erfindung, dessen Koaleszenz-Filterelement nach dem Verfahren gemäß der vorliegenden Erfindung in das Gehäuse des Aerosolabscheiders einbaubar ist, wobei die Abdeckung der Gehäuseöffnung geöffnet und das Koaleszenz-Filterelement in einer Wartungsposition angeordnet ist;
**Fig. 2** in Seitenansicht den Aerosolabscheider aus Figur 1, wobei die Abdeckung der Gehäuseöffnung geschlossen und das Koaleszenz-Filterelement in einer Gebrauchsposition angeordnet ist;
**Fig. 3** in Längsschnittdarstellung den Aerosolabscheider aus Figur 1; und
**Fig. 4** in einer weiteren Längsschnittdarstellung den Aerosolabscheider aus Figur 1 ;
**Fig. 5** in einer weiteren Längsschnittdarstellung den Aerosolabscheider aus Figur 1 ;
**Fig. 6** in Querschnittdarstellung den Aerosolabscheider aus Figur 1;
**Fig. 7** eine weitere Querschnittdarstellung des Aerosolabscheiders aus Figur 1; und
**Fig. 8** eine Außenansicht des Aerosolabscheiders aus Figur 1.

Gleiche oder ähnliche Ausgestaltungen, Elemente oder Merkmale sind in Figuren 1 bis 8 mit identischen Bezugszeichen versehen.

### Ausführungsform(en) der Erfindung

Im anhand der Figuren 1 bis 8 veranschaulichten Ausführungsbeispiel der vorliegenden Erfindung ist ein Aerosolabscheider 100 gezeigt, dessen Koaleszenz-Filterelement 10 nach dem Verfahren gemäß der vorliegenden Erfindung in das Gehäuse 30 des Aerosolabscheiders 100 einbaubar ist. Der Aerosolabscheider 100 ist zum Abscheiden von Aerosol, insbesondere von öl- oder emulsionsbasierten Kühlschmiermittelaerosolen, welches in Fertigungsmaschinen oder Bearbeitungsmaschinen (nicht gezeigt), z.B. beim Bohren, Drehen, Fräsen oder Schleifen, entsteht, ausgebildet.

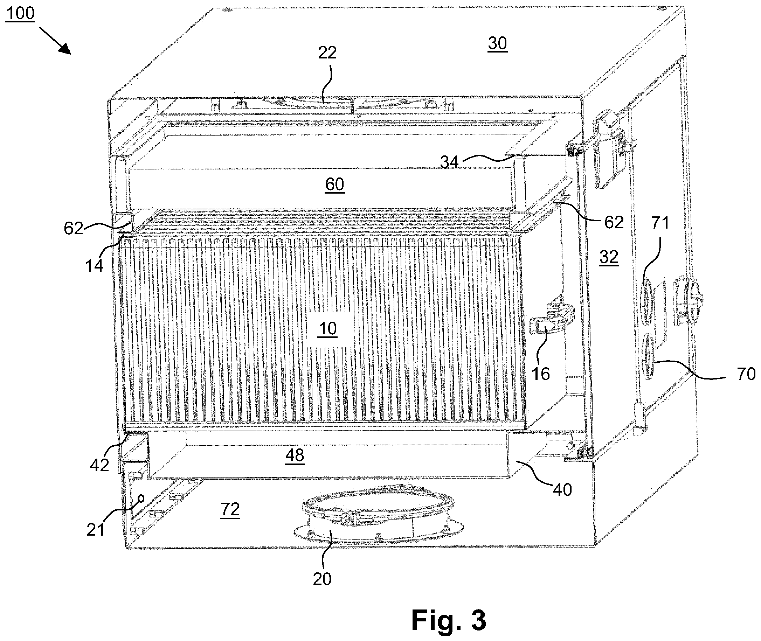

Die mit Aerosolpartikeln beladene Luft wird aus dem Bearbeitungsraum einer Fertigungsmaschine von einem Motor, insbesondere von einem Elektromotor 76, mit einem Ventilator 74, abgesaugt und strömt über einen Rohlufteinlass 20 in das Gehäuse 30 des Aerosolabscheiders 100 ein. Der Rohlufteinlass 20 kann zentral am Gehäuseboden angeordnet sein. Dies ermöglicht es, den Aerosolabscheider 100 auf dem Dach einer Fertigungsmaschine anzuordnen und mit dieser zu verbinden. Um den Aerosolabscheider 100 neben einer Fertigungsmaschine aufzustellen und mit dieser verbinden zu können, kann der Aerosolabscheider 100 zusätzlich zu dem zentralen Rohlufteinlass 20 weitere Rohlufteinlässe 21, 22, 23 aufweisen (vgl. Figuren 3, 4, 5, 7 und 8).

Im Aerosolabscheider 100 wird die Luft durch unterschiedliche Filterelemente geführt, nämlich durch
- ein, beispielsweise als Drahtgestrick ausgebildetes, Vorabscheiderelement zum Abscheiden grober Schmutzpartikel,
- mindestens ein als Hauptabscheiderelement ausgebildetes Koaleszenz-Filterelement 10 zum Abscheiden von Aerosolpartikeln aus Luft und
- ein Nachabscheiderelement 60, insbesondere einen Feinfilter oder Schwebstofffilter, zum Abscheiden von feinsten Partikeln wie Rauch, Bakterien, Pollen und Sporen aus Luft.

Der Volumenstrom, welcher die Filterelemente durchläuft, umfasst bei dem gezeigten Ausführungsbeispiel etwa 700 Kubikmeter Luft pro Stunde. Es ist aber auch möglich, den Aerosolabscheider derart auszubilden, dass er von einem geringeren oder einem größeren Gasvolumenstrom durchströmbar ist. So kann beispielsweise einem nach der vorliegenden Erfindung ausgebildeten Aerosolabscheider auch die Abluft mehrerer Fertigungsmaschinen zugeführt werden und dieser dazu ausgebildet sein, die Raumluft einer ganzen Fertigungshalle zu reinigen.

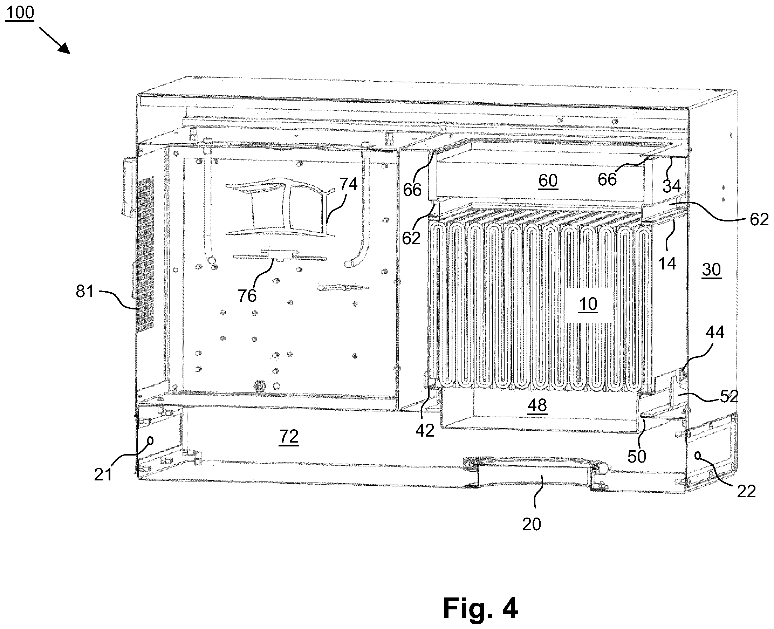

Im gereinigten Zustand verlässt die Luft das Gehäuse 30 über mindestens einen Reinluftauslass 81, 82 und wird zurück in den Raum oder nach außen in die Umgebung geführt. Die Reinluftauslässe 81, 82 sind in Figuren 4, 5 und 6 mittels Gitterstrukturen dargestellt.

Zur Aufnahme abgeschiedener Flüssigkeit, die im Koaleszenz-Filterelement 10 aus feinen Aerosolpartikeln zu größeren Tropfen anwächst und der Schwerkraft folgend nach unten abtropft, weist der Aerosolabscheider 100 ein Sammelvolumen 72 auf, wobei das Sammelvolumen in einem der Schwerkraft folgenden unteren Bereich des Gehäuses 30 angeordnet ist. Von dort kann es abgepumpt oder mittels mindestens eines Absperrhahns abgeleitet werden.

Vorzugsweise kann der Aerosolabscheider 100 zwei sog. Ablassstellen 83, 84, die mit Schrauben verschlossen sind, aufweisen. An diesen Stellen kann wahlweise über einen Schlauch oder ein Rohr die abgeschiedene Flüssigkeit zurück in den Kühlschmiermittelkreislauf der Bearbeitungsmaschine zurückgeführt, oder auch mittels einer Pumpe abgesaugt und entsorgt werden.

Im gezeigten Ausführungsbeispiel ist das Koaleszenz-Filterelement 10 in einem Filtereinsatz, nämlich einer Filterkassette mit einem stabilen Metallrahmen, angeordnet. Das Koaleszenz-Filterelement 10 weist ein nach dem Koaleszenz-Prinzip arbeitendes Filtermedium auf, beispielsweise ein gefaltetes, mehrschichtiges Glasfasermedium mit integrierten Aluminium-Separatoren. Das Filtermedium kann auch ein synthetisches sein, oder eine Kombination aus Gasfasermedium und synthetischem Medium. Ebenso können die Separatoren aus anderen Werkstoffen als Aluminium bestehen, beispielsweise aus Kunststoffen, Pappe, oder einem anderen gegen Flüssigkeit/Aerosole beständigen Material.

Zur leichteren Handhabung kann das Koaleszenz-Filterelement 10, insbesondere die Filterkassette des Koaleszenz-Filterelements 10, einen Griff 16 aufweisen. Zur axialen Abdichtung kann auf dem Koaleszenz-Filterelement 10 eine in Gebrauchsstellung obenliegende medienbeständige Dichtung oder kühlschmiermittelbeständige Dichtung angeordnet sein.

Im Gehäuse 30 des in Figur 1 gezeigten Aerosolabscheiders 100 ist eine Filterkassette 10 anordbar. Alternativ kann der Aerosolabscheider 100 auch mehrere, jeweils zur Aufnahme einer Filterkassette ausgebildete, in Durchströmrichtung nacheinander angeordnete Gehäuseelemente aufweisen (nicht dargestellt). Diese Gehäuseelemente können beispielsweise turmartig übereinander angeordnet sein. So können beispielsweise in Durchströmrichtung zwei Filterkassetten hintereinander angeordnet sein, wobei in beiden Filterkassetten ein nach dem Koaleszenz-Prinzip arbeitendes Filtermedium 10 angeordnet ist. Um unterschiedliche Filterstufen bereitzustellen, kann das Koaleszenz-Filterelement 10 der zweiten Filterkassette im Aufbau feiner sein als das Koaleszenz-Filterelement 10 der ersten Filterkassette.

Der Verschmutzungsgrad des Koaleszenz-Filterelements 10 ist mittels einer Differenzdruckanzeige 70 bestimmbar. Bei einem definierten Druckverlust sollte die Filterkassette 10 gewechselt werden.

Wie in Figuren 1, 2, 3 und 8 gezeigt, kann der Aerosolabscheider zudem eine weitere Differenzdruckanzeige 71 aufweisen, mittels welcher der Verschmutzungsgrad des Feinfilters 60 bestimmbar ist.

Zum Austauschen der Filterkassette 10 wird eine schwenkbar am Gehäuse gelagerte Tür 32 zur Bedienseite hin geöffnet (vgl. Figur 1).

Im geschlossenen Zustand ist die Tür 32 senkrecht zur Auflagefläche 42 bzw. parallel zur Gehäuseachse (Y) angeordnet. Im vollständig geöffneten Zustand ist die Tür senkrecht oder nahezu senkrecht zur Gehäuseachse (Y) angeordnet.

Die Filterkassette 10 ist im Gehäuse 30 auf einer verschiebbaren Auflagefläche 42, nämlich auf einem Tragrahmen 42, eines rollengelagerten Schubladenelements 40 angeordnet.

Sofern der Aerosolabscheider dazu ausgebildet ist, mehrere Filterkassetten 10 aufzunehmen (nicht gezeigt), so weist jedes zur Aufnahme eines Koaleszenz-Filterelements 10 ausgebildete Gehäuseelement eine Gehäuseöffnung der vorstehend dargelegten Art, eine Tür 32 der vorstehend dargelegten Art sowie ein Schubladenelement 40 der vorstehend dargelegten Art auf.

Die Auflagefläche des Tragrahmens 42 des in Figuren 1 bis 8 dargestellten Aerosolabscheiders 100 ist in Gebrauchsstellung senkrecht zur Gehäuseachse (Y) angeordnet. Des Weiteren kann das Schubladenelement 40 zwei den Tragrahmen 42 seitlich begrenzende Seitenränder 46 aufweisen, wobei die Seitenränder 46 dazu ausgebildet sind, ein seitliches Verrutschen der Filterkassette 10 auf dem Tragrahmen 42 zu verhindern.

Bei dem in Figur 1 gezeigten Ausführungsbeispiel beträgt im vollständig geöffneten Zustand der Tür der Winkel zwischen der Gehäuseachse (Y) und der Tür 32 weniger als 90 Grad, insbesondere etwa 70 Grad bis 89 Grad, beispielsweise etwa 85 Grad. Der Öffnungswinkel der Tür 32 ist also derart begrenzt, dass die Tür 32 auch in ihrer vollständig geöffneten Stellung leicht zur Gehäuseöffnung hin geneigt ist. Dies hat den Vorteil, dass die Tür sowohl in der geschlossenen Stellung also auch in der vollständig geöffneten Stellung an dem Schubladenelement 40 anliegt. So kann die Tür 32 sowohl in der geöffneten Stellung als auch in der geschlossenen Stellung mit dem Schubladenelement 40 zusammenwirken.

Um das Schubladenelement 40 bewegbar im Gehäuse 30 zu lagern, weist dieses als Bewegungsmittel 44 vier Rollen, nämlich vier Kugellager, auf. Anstelle von Kugellagern können auch andere Lagerbauarten eingesetzt werden, die eine Drehbewegung erlauben, z.B. Rollenlager oder Gleitlager. Diese können, wie in Figuren 1, 2, 4, 5 und 6 gezeigt, an den Seitenrändern 46 des Schubladenelements 40, etwa des Tragrahmens 42, angeordnet sein. Aber auch eine "inverse" Bauweise, bei welcher die Bewegungsmittel 44 am Gehäuse und die Rampenkonturen 52 am Schubladenelement 40 angeordnet sind, ist möglich.

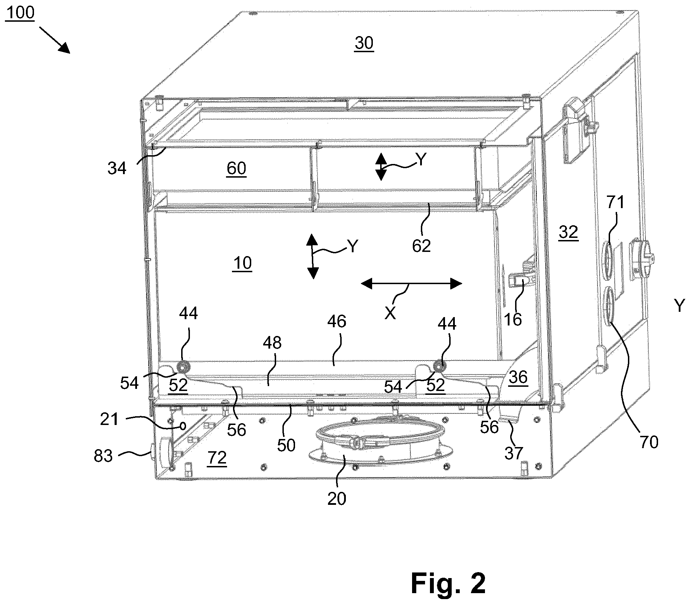

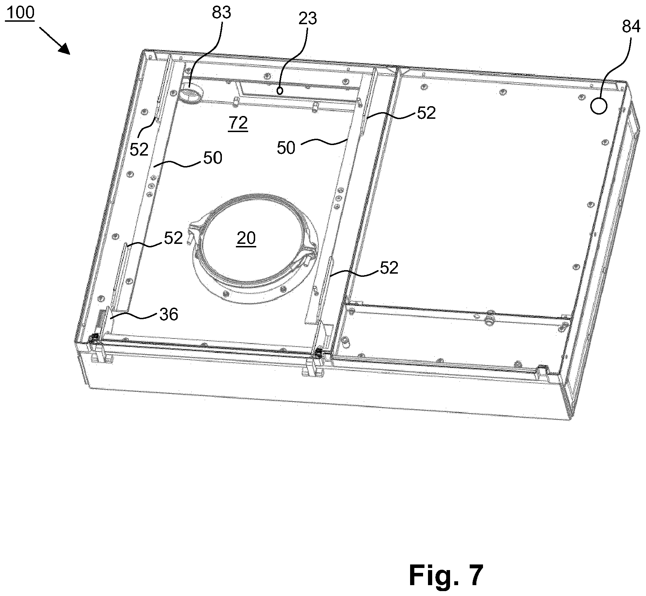

Zum Führen der Bewegung des Schubladenelements 40 sind die Kugellager 44 jeweils auf einem Führungselement 52, beispielsweise auf einer bogenkurvenförmigen Schiene, nämlich auf einer Rampenkontur, gelagert (vgl. Figuren 1, 2). Die Rampenkonturen 52 sind auf Tragschienen 50, die an gegenüberliegenden Innenseiten des Gehäuses 30 befestigt sind, ortsfest angeordnet (vgl. Figur 7).

Zum Begrenzen des Öffnungswinkels der Tür weist die Tür 32 ein Begrenzungselement 36 mit einer in der geöffneten Stellung der Tür 32 am Gehäuse 30, insbesondere an der von der Filterkassette 10 abgewandten Seite der Tragschienen 50, anliegenden Nase 37 auf (vgl. Figur 2).

Um eine Filterkassette 10 in den Aerosolabscheider einzusetzen, wird die Filterkassette 10 bei geöffneter Tür auf den Tragrahmen 42 des Schubladenelements 40 aufgelegt. Bei geöffneter Tür 32 erstreckt sich das Schubladenelement 40 durch die Gehäuseöffnung und ragt bereichsweise aus dem Gehäuse 30 heraus (Figur 1).

Beim Schließen der Tür 32 drückt diese gegen das Schubladenelement 40, wodurch das Schubladenelement 40 das Koaleszenz-Filterelement 10 in seine Gebrauchsposition bewegt. Dabei drückt die Tür 32 das Schubladenelement 40 in das Gehäuse 30 hinein, wobei das Schubladenelement 40 das Koaleszenz-Filterelement 10 mittels einer Rampenaxialbewegung axial dichtend im Gehäuse verspannt. In der Gebrauchsposition ist das Koaleszenz-Filterelement 10 axial dichtend zwischen dem Tragrahmen 42 und einem im Strömungsweg nach dem Koaleszenz-Filterelement 10 angeordneten, in seiner Axialposition verschieblichen und zum Tragen mindestens eines Nachabscheiderelements ausgebildeten Träger 62 verspannt.

Wenn also die Kugellager 44 sich auf der Rampenkontur 52 nach oben, also in Richtung der Durchströmrichtung des Koaleszenz-Filterelements 10, bewegen, dann bewegen sich das Koaleszenz-Filterelement 10 und das Nachabscheiderelement 60 nach oben zu einer ortsfesten Abdichtfläche 34 des Gehäuses 30 hin. Dabei dient der Träger 62 als Abdichtung für das Koaleszenz-Filterelement 10 und überträgt die Dichtkraft nach oben gegen die Abdichtfläche 34 des Gehäuses 30. In der Gebrauchsstellung des Aerosolabscheiders 100 sind das Koaleszenz-Filterelement 10 und das Nachabscheiderelement 60 axial dichtend gegen die Abdichtfläche 34 des Gehäuses 30 gepresst.

Der Ausbau des Koaleszenz-Filterelements 10 erfolgt in umgekehrter Reihenfolge. Nach dem Öffnen der Tür 32 rollt das Schubladenelement 40 der Schwerkraft folgend auf der Rampenkontur 52 nach unten. Dabei wird das Koaleszenz-Filterelement 10 mittels der Rampenaxialbewegung nach unten gesenkt, bis das Koaleszenz-Filterelement 10, insbesondere bis ein auf dem Koaleszenz-Filterelement 10 angeordnetes Koaleszenzfilter-Dichtelement 14, nicht mehr im Eingriff ist mit dem in seiner Axialposition verschieblichen Träger 62. Zum Wechsel der Filterkassette 10 kann diese dann an einem Griff 16, der z.B. an der Filterkassette 10 befestigt ist, herausgezogen werden. Dabei kann die Filterkassette 10 entnommen werden, ohne eine Gleitreibung auf das Koaleszenzfilter-Dichtelement 14 zu bringen.

Insgesamt zeigen Figuren 1 bis 8 einen Filterelementwechselmechanismus mit Abdichtfunktion. Der Filterelementwechselmechanismus erlaubt es, das auf dem Schubladenelement 40 angeordnete Koaleszenz-Filterelement 10 ähnlich einer rollengelagerten Schrankschublade in horizontaler Richtung (X) in das Gehäuse 30 einzubringen. Das Schubladenelement 40 bewegt sich auf einer Bahnkurve 52 bzw. auf einer räumlich gekrümmten Schiene 52, die während des Einschiebens das Schubladenelement 40 gleichzeitig auch nach oben (Y-Achse) bewegt. Das Schubladenelement 40 ist also mit der Tür 32 über Rampenkonturen 52 in die Gebrauchsposition bringbar. Dadurch wird in der Gebrauchsposition eine axiale Abdichtung des Hauptabscheiderelements 10 sichergestellt.

Für einen Benutzer des in Figuren 1 bis 8 gezeigten Aerosolabscheiders 100 ergibt sich der Vorteil, dass die Bedienungsschritte im Vergleich zum Stand der Technik deutlich vereinfacht und verringert sind. So kann mittels weniger Arbeitsschritte das Vorabscheiderelement sowie das Hauptabscheiderelement 10 derart im Gehäuse 30 angeordnet werden, dass Rohseite und Reinseite gasdicht voneinander getrennt sind. Dabei wird insbesondere
- das Vorabscheiderelement in das im Aerosolabscheider 100 gelagerte Schubladenelement 40 angeordnet,
- das Hauptabscheiderelement 10 auf der Auflagefläche 42 des Schubladenelements 40 angeordnet, insbesondere über das Vorabscheiderelement gelegt oder geschoben, und
- die Tür 32 geschlossen, wobei während dem Schließen der Tür 32 das Koaleszenz-Filterelement 10 derart dichtend im Gehäuse 30 angeordnet wird, dass im Gehäuse 30 die Rohseite gasdicht von der Reinseite getrennt ist.

Dies ermöglicht einen besonders einfachen, schnellen und sicheren Wechsel des Koaleszenz-Filterelements.

### Bezugszeichenliste

- 10: Koaleszenz-Filterelement oder Tröpfchenabscheiderelement zum Abscheiden von Aerosolpartikeln aus Gas, insbesondere von öl- oder emulsionsbasierten Kühl-schmiermittelaerosolpartikeln aus Luft, etwa von Kühlschmierstoffaerosolpartikeln oder von Trennmittelaerosolpartikeln aus Luft, beispielsweise Hauptfilterelement oder Hauptabscheiderelement, etwa Filtereinsatz oder Filterkassette mit mindes-tens einem Koaleszenz-Filterelement
- 14: Koaleszenzfilter-Dichtelement, insbesondere am Koaleszenz-Filterelement 10 an-geordnetes Dichtelement, beispielsweise um die dem Träger zugewandte Oberflä-che des Koaleszenz-Filterelements 10 umlaufend angeordnetes Koaleszenzfilter-Dichtelement
- 16: Griff
- 20: Rohgaseinlass, insbesondere Rohlufteinlass
- 21: weiterer Rohgaseinlass
- 22: weiterer Rohgaseinlass
- 23: weiterer Rohgaseinlass
- 30: Gehäuse oder Gehäusekörper
- 32: Abdeckung, insbesondere Tür oder Gehäusetür, zum Schließen der Gehäuseöff-nung
- 34: Abdichtfläche des Gehäuses
- 36: Begrenzungselement zum Begrenzen des Öffnungswinkels der Tür 32, insbeson-dere zum Fixieren der Stellung der Tür 32 in der Öffnungsposition
- 37: Nase des Begrenzungselements 36
- 40: bewegliches Schubladenelement oder Schlittenelement, insbesondere fahrbarer Tragrahmen 42, beispielsweise Tragrahmen 42 mit Kugellager 44
- 42: Auflagefläche, insbesondere Tragrahmen, für das Koaleszenz-Filterelement 10
- 44: Bewegungsmittel, insbesondere Laufrollen, beispielsweise Rollenlager, Gleitlager oder Kugellager
- 46: Seitenrand des Schubladenelements 40
- 48: Vorabscheideraufnahmebereich, insbesondere ein zur Aufnahme des Vorabschei-derelements ausgebildetes Aufnahmevolumen oder Aufnahmefach
- 49: der Gehäuseöffnung zugewandte Kante (vgl. Figur 9) des Schubladenelements 40
- 50: Tragschiene zum Lagern des Führungselements 52
- 52: Führungselement, insbesondere Führungsschiene, beispielsweise Rampenkontur, etwa bogenkurvenartige Schiene
- 54: Gebrauchspositionstragfläche des Führungselements 52, auf welcher das Schubladenelement 40 in der Gebrauchsposition aufliegt, beispielsweise durch die Abdeckung 32 gehalten wird (vgl. Figuren 1 und 2)
- 56: Wartungspositionstragfläche des Führungselements 52, auf welcher das Schubladenelement 40 in der Wartungsposition aufliegt, beispielsweise durch die Abdeckung 32 gehalten wird (Figuren 1 und 2)
- 60: Nachabscheiderelement, insbesondere Feinfilter oder Schwebstofffilter zum Abscheiden von feinsten Partikeln wie Rauch, Bakterien, Pollen und Sporen aus Gas, insbesondere aus Luft
- 62: in seiner Axialposition verschieblicher und zum Tragen mindestens eines Nachabscheiderelements 60 ausgebildeter Träger, insbesondere Trägerrahmen oder Dichtrahmen oder Zwischenrahmen
- 66: Gehäuseabdichtfläche-Nachabscheider-Dichtelement, insbesondere am Nachabscheiderelement 60 angeordnetes Dichtelement, beispielsweise um die vom Koaleszenz-Filterelement 10 abgewandte Oberfläche des Nachabscheiders 60 umlaufend angeordnetes Nachabscheider-Dichtelement
- 70: Differenzdruckanzeige
- 71: weitere Differenzdruckanzeige
- 72: Sammelvolumen zum Sammeln der aus dem Aerosol abgeschiedenen Flüssigkeit
- 74: Ventilator oder Gebläse
- 76: Elektromotor mit Gebläse zum Erzeugen eines Gasstroms, insbesondere eines Luftstroms, beispielsweise Ansaugen des Rohgases, insbesondere der Rohluft, und zum Ausblasen des Reingases, insbesondere der Reinluft
- 81: Reingasauslass, insbesondere Reinluftauslass
- 82: weiterer Reingasauslass, insbesondere weiterer Reinluftauslass
- 83: Flüssigkeitsablass oder Ablassstelle
- 84: weiterer Flüssigkeitsablass oder weitere Ablassstelle
- 100: Aerosolabscheider oder Aerosolabscheideeinheit, insbesondere Ölnebelabscheider oder Ölnebelabscheideeinheit
- X: senkrecht oder im Wesentlichen senkrecht zur Durchströmrichtung des Aerosolabscheiders 100 angeordnete Richtung bzw. senkrecht oder im Wesentlichen senkrecht zur Achsrichtung Y des Aerosolabscheiders100 angeordnete Richtung, insbesondere horizontale Richtung
- Y: axiale Richtung des Aerosolabscheiders 100

## Patentansprüche

1. Aerosolabscheider (100) zum Abscheiden von Aerosolpartikeln aus Gas, wobei der Aerosolabscheider (100) ein Gehäuse (30) mit einer Gehäuseöffnung und einer zum Schließen der Gehäuseöffnung ausgebildeten Abdeckung (32) aufweist, wobei durch die Gehäuseöffnung mindestens ein Koaleszenz-Filterelement (10) in das Gehäuse (30) einbringbar und aus dem Gehäuse (30) entnehmbar ist, wobei der Aerosolabscheider (100) eine Auflagefläche (42) für das Koaleszenz-Filterelement (10) aufweist und wobei das Koaleszenz-Filterelement (10) in einer Gebrauchsposition des Aerosolabscheiders (100) verrutschsicher in dem Gehäuse (30) verspannt ist und in einer Wartungsposition des Aerosolabscheiders (100) derart lose im Gehäuse angeordnet ist, dass das Koaleszenz-Filterelement (10) aus dem Gehäuse (30) entnehmbar ist,
**dadurch gekennzeichnet, dass**
- die Auflagefläche (42) einem Schubladenelement (40) zugeordnet ist,
- der Aerosolabscheider (100) mindestens ein Bewegungsmittel (44) aufweist, das dazu ausgebildet ist, das Schubladenelement (40) bewegbar im Gehäuse (30) zu lagern,
- der Aerosolabscheider (100) zum Führen der Bewegung des Schubladenelements (40) mindestens ein Führungselement (52) aufweist, und
- das Bewegungsmittel (44) und das Führungselement (52) derart zusammenwirken, dass das Koaleszenz-Filterelement (10) durch die Bewegung des Schubladenelements (40) von der Wartungsposition in die Gebrauchsposition, dichtend im Gehäuse (30) verspannbar, bewegbar ist und von der Gebrauchsposition in die Wartungsposition bewegbar ist,
- wobei das Führungselement (52) dazu ausgebildet ist, das Schubladenelement (40) sowohl in mindestens eine senkrecht zur Gehäuseachse angeordnete horizontale Richtung (X) zu führen, als auch gleichzeitig in mindestens eine parallel zur Gehäuseachse angeordnete axiale Richtung (Y) zu führen; und
**dadurch gekennzeichnet, dass** die Abdeckung (32) eine am Gehäuse (30) schwenkbar gelagerte Tür ist; und dass das Schubladenelement (40) derart mit der Tür (32) zusammenwirkt, dass durch Öffnen der Tür (32) die Auflagefläche (42) in die Wartungsposition und durch Schließen der Tür (32) die Auflagefläche (42) in die Gebrauchsposition bewegbar ist.

2. Aerosolabscheider nach Anspruch 1, **dadurch gekennzeichnet, dass**
- im offenen Zustand der Gehäuseöffnung das Schubladenelement (40) sich durch die Gehäuseöffnung erstreckt und bereichsweise aus dem Gehäuse (30) herausragt,
- das Führungselement (52) mindestens eine Rampenkontur aufweist, und
- die Abdeckung (32), das Schubladenelement (40) und die Rampenkontur (52) dazu ausgelegt sind; derart zusammenzuwirken, dass beim Schließen der Abdeckung (32) diese (32) gegen das Schubladenelement (40) drückt, wobei durch den von der Abdeckung (32) ausgeübten Druck das Schubladenelement (40) vollständig in das Gehäuse hinein bewegbar ist und dabei das Koaleszenz-Filterelement (10) mittels einer Rampenaxialbewegung in die Gebrauchsposition bewegbar ist.

3. Aerosolabscheider nach mindestens einem der Ansprüche 1 oder 2, **gekennzeichnet durch**
- einen Rohgaseinlass (20) zum Einlassen von mit Aerosolpartikeln beladenem Rohgas, insbesondere von aus dem Bearbeitungsraum abgesaugter Raumluft, und einen Reingasauslass (81, 82) zum Auslassen von durch den Aerosolabscheider (100) gereinigtem Reingas, insbesondere von Reinluft, wobei das Koaleszenz-Filterelement im Strömungsweg zwischen dem Rohgaseinlass (20) und dem Reingasauslass (81, 82) angeordnet ist, und
- einen im Strömungsweg nach dem Koaleszenz-Filterelement (10) angeordneten, in seiner Axialposition verschieblichen und zum Tragen mindestens eines Nachabscheiderelements (60) ausgebildeten Träger (62),
wobei der Träger (62), das Koaleszenz-Filterelement (10) und das Schubladenelement (40) derart ausgebildet sind, dass abhängig von der Bewegung des Schubladenelements (40) der Träger (62) in seiner Axialposition verschiebbar ist.

4. Aerosolabscheider nach Anspruch 3, **gekennzeichnet durch** ein zwischen dem Träger (62) und dem Koaleszenz-Filterelement (10) angeordnetes Koaleszenzfilter-Dichtelement (14) zur Trennung der Rohseite von der Reinseite, wobei in der Gebrauchsposition des Aerosolabscheiders (100), das Koaleszenzfilter-Dichtelement (14) dichtend zwischen dem Koaleszenz-Filterelement (10) und dem Träger (62) angeordnet, insbesondere verpresst oder verspannt, ist.

5. Aerosolabscheider nach Anspruch 3 oder 4, **gekennzeichnet durch**
- ein im Strömungsweg nach dem Träger (62) angeordnetes und zum Abscheiden von feinsten Partikeln wie Rauch, Bakterien, Pollen und Sporen aus Gas ausgebildetes Nachabscheiderelement (60), insbesondere Feinfilter oder Schwebstofffilter der Filterklasse H13 (HEPA) nach DIN-EN 1822, und
- eine im Strömungsweg nach dem Nachabscheiderelement (60) angeordnete, am Gehäuse (30) befestigte oder einstückig mit dem Gehäuse (30) ausgebildete Abdichtfläche (34),
wobei in der Gebrauchsposition des Aerosolabscheiders (100) das Nachabscheiderelement (60) dichtend zwischen der Abdichtfläche (34) des Gehäuses (30) und dem Träger (62) angeordnet, insbesondere verpresst oder verspannt, ist.

6. Aerosolabscheider nach mindestens einem der Ansprüche 1 bis 5, **dadurch gekennzeichnet, dass** das Koaleszenz-Filterelement (10) als ein Hauptabscheiderelement ausgebildet ist.

7. Aerosolabscheider nach mindestens einem der Ansprüche 1 bis 6, **dadurch gekennzeichnet, dass** das Schubladenelement (40) das Koaleszenz-Filterelement (10) und mindestens ein zum Abscheiden von groben Schmutzpartikeln ausgebildetes Vorabscheiderelement trägt.

8. Aerosolabscheider nach mindestens einem der Ansprüche 1 bis 7, wobei die Tür (32) dazu ausgebildet ist, in ihrer vollständig geöffneten Stellung als Ablagefläche für das Koaleszenz-Filterelement (10) zu dienen.

9. Aerosolabscheider nach mindestens einem der Ansprüche 1 bis 8, **dadurch gekennzeichnet, dass** das Führungselement (52) bogenkurvenförmig, insbesondere nach Art einer räumlich gekrümmten Schiene, ausgebildet ist.

10. Aerosolabscheider nach mindestens einem der Ansprüche 1 bis 9, **dadurch gekennzeichnet, dass** das Bewegungsmittel (44) am Schubladenelement (40) angeordnet ist.

11. Fertigungsmaschine, die mittels eines elektronischen Verfahrens gesteuert ist, umfassend einen Aerosolabscheider nach mindestens einem der Ansprüche 1 bis 10.

12. Verfahren zum Einbau eines Koaleszenz-Filterelements in einen zum Abscheiden von Aerosolpartikeln aus Gas ausgebildeten Aerosolabscheider (100), wobei
- das Koaleszenz-Filterelement (10) durch eine Gehäuseöffnung in ein Gehäuse (30) des Aerosolabscheiders (100) eingebracht wird und
- das Koaleszenz-Filterelement (10) im Strömungsweg zwischen einem Rohgaseinlass (20) und einem Reingasauslass (81, 82) angeordnet wird,
**dadurch gekennzeichnet, dass**
beim Einbringen des Koaleszenz-Filterelements (10) in das Gehäuse (30)
- das Koaleszenz-Filterelement (10) auf eine Auflagefläche (42) eines im Gehäuse bewegbar gelagerten Schubladenelements (40) aufgelegt wird, und
- das Schubladenelement (40) derart bewegt wird, dass das Koaleszenz-Filterelement (10) durch die Bewegung des Schubladenelements (40) von einer Wartungsposition des Aerosolabscheiders (100), in welcher das Koaleszenz-Filterelement (10) aus dem Gehäuse (30) entnehmbar ist, in eine Gebrauchsposition des Aerosolabscheiders (100), in welcher das Koaleszenz-Filterelement (10) verrutschsicher und dichtend im Gehäuse (30) verspannt ist, bewegt wird,
- das Schubladenelement (40) sowohl in mindestens eine senkrecht zur Gehäuseachse angeordnete horizontale Richtung (X) als auch gleichzeitig in mindestens eine parallel zur Gehäuseachse angeordnete axiale Richtung (Y) geführt wird,
- wobei beim Einbringen des Koaleszenz-Filterelements (10) in das Gehäuse (30) die Gehäuseöffnung mit einer Abdeckung (32) verschlossen wird, und wobei beim Schließen der Abdeckung (32) diese derart gegen das Schubladenelement (40) drückt, dass das Schubladenelement (40) das Koaleszenz-Filterelement (10) in seine Gebrauchsposition bewegt,
- wobei die Abdeckung (32) eine am Gehäuse (30) schwenkbar gelagerte Tür ist; und dass das Schubladenelement (40) derart mit der Tür (32) zusammenwirkt, dass durch Öffnen der Tür (32) die Auflagefläche (42) in die Wartungsposition und durch Schließen der Tür (32) die Auflagefläche (42) in die Gebrauchsposition bewegbar ist.

13. Verfahren nach Anspruch 12, **dadurch gekennzeichnet, dass** das Schubladenelement (40) das Koaleszenz-Filterelement (10) mittels einer Rampenaxialbewegung in seine Gebrauchsposition bewegt.

14. Verfahren nach Anspruch 12 oder 13, **dadurch gekennzeichnet, dass** beim Schließen der Abdeckung (32) das Koaleszenz-Filterelement (10) axial dichtend im Gehäuse verspannt wird.

15. Verfahren nach mindestens einem der Ansprüche 12 bis 14, **dadurch gekennzeichnet, dass** vor dem Auflegen des Koaleszenz-Filterelements (10) auf das Schubladenelement (40) ein als Vorfilter ausgebildetes Vorabscheiderelement auf dem Schubladenelement (40) angeordnet wird, so dass beim Schließen der Abdeckung (32) das Schubladenelement (40) sowohl das Vorabscheiderelement als auch das Koaleszenz-Filterelement (10) trägt.

## Claims

1. Aerosol separator (100) for separating aerosol particles from gas, wherein the aerosol separator (100) features a housing (30) having a housing opening and a cover (32) designed for closing the housing opening, wherein at least one coalescence filter element (10) is insertable into the housing (30) and extractable from the housing (30) through the housing opening, wherein the aerosol separator (100) features a contact surface (42) for the coalescence filter element (10) and wherein the coalescence filter element (10) is tensioned in a slip-resistant manner in the housing (30) in a position of use of the aerosol separator (100) and disposed loosely in the housing in a maintenance position of the aerosol separator (100) in such a way that the coalescence filter element (10) is extractable from the housing (30),
**characterized in that**
- the contact surface (42) is associated with a drawer element (40),
- the aerosol separator (100) features at least one movement means (44) designed to movably support the drawer element (40) in the housing (30),
- the aerosol separator (100) features at least one guiding element (52) for guiding the movement of the drawer element (40) and
- the moving means (44) and the guiding element (52) cooperate in such a way that the coalescence filter element (10) is movable through the movement of the drawer element (40) from the maintenance position to the position of use, sealingly tensionable in the housing (30), and movable from the position of use to the maintenance position,
- wherein the guiding element (52) is designed to guide the drawer element (40) both in at least one horizontal direction (X) disposed perpendicularly to the housing axis and simultaneously in at least one axial direction (Y) disposed parallel to the housing axis; and
**characterized in that** the cover (32) is a door pivotally mounted on the housing (30); and **in that** the drawer element (40) cooperates with the door (32) in such a way that by opening the door (32) the contact surface (42) is movable into the maintenance position and by closing the door (32) the contact surface (42) is movable into the position of use.

2. Aerosol separator according to claim 1, **characterized in that**
- in the open state of the housing opening, the drawer element (40) extends through the housing opening and projects out of the housing (30) in some areas,
- the guiding element (52) features at least one ramp contour, and
- the cover (32), the drawer element (40) and the ramp contour (52) are designed to cooperate in such a way that, when the cover (32) is closed, it (32) presses against the drawer element (40), wherein through the pressure exerted by the cover (32) the drawer element (40) is fully movable into the housing, and in doing so the coalescence filter element (10) is movable into the position of use using a ramp axial movement.

3. Aerosol separator according to at least one of the claims 1 or 2, **characterized by**
- a raw gas inlet (20) for admitting raw gas containing aerosol particles, in particular ambient air extracted from the processing chamber, and a clean gas outlet (81, 82) for discharging clean gas purified by the aerosol separator (100), in particular clean air,
wherein the coalescence filter element is disposed in the flow path between the raw gas inlet (20) and the clean gas outlet (81, 82), and
- a support (62) disposed in the flow path downstream of the coalescence filter element (10), displaceable in its axial position and designed to support at least one secondary separator element (60),
wherein the support (62), the coalescence filter element (10) and the drawer element (40) are designed in such a way that, depending on the movement of the drawer element (40), the support (62) is movable in its axial position.

4. Aerosol separator according to claim 3, **characterized by** a coalescence filter sealing element (14) disposed between the support (62) and the coalescence filter element (10) for separating the raw side from the clean side, wherein in the position of use of the aerosol separator (100), the coalescence filter sealing element (14) is sealingly disposed between the coalescence filter element (10) and the support (62), in particular pressed or tensioned.

5. Aerosol separator according to claim 3 or 4, **characterized by**
- a secondary separator element (60) disposed in the flow path downstream of the support (62) and designed to separate very fine particles like smoke, bacteria, pollen and spores from gas, in particular fine filters or suspended matter filters of filter class H13 (HEPA) according to DIN-EN 1822, and
- a sealing surface (34) disposed in the flow path downstream of the secondary separator element (60) and attached to the housing (30) or integral with the housing (30),
wherein in the position of use of the aerosol separator (100), the secondary separator element (60) is disposed sealingly between the sealing surface (34) of the housing (30) and the support (62), in particular pressed or tensioned.

6. Aerosol separator according to at least one of the claims 1 to 5, **characterized in that** the coalescence filter element (10) is designed as a main separator element.

7. Aerosol separator according to at least one of the claims 1 to 6, **characterized in that** the drawer element (40) supports the coalescence filter element (10) and at least one preliminary separator element designed for separating coarse contaminant particles.

8. Aerosol separator according to at least one of the claims 1 to 7, wherein the door (32) is designed to serve as a deposition surface for the coalescence filter element (10) in its fully open position.

9. Aerosol separator according to at least one of the claims 1 to 8, **characterized in that** the guiding element (52) is designed in the shape of an arcuate curve, in particular in accordance with one of the types of a spatially curved rail.

10. Aerosol separator according to at least one of the claims 1 to 9, **characterized in that** the movement means (44) is disposed at the drawer element (40).

11. Manufacturing machine controlled by using an electronic method, comprising an aerosol separator according to at least one of the claims 1 to 10.

12. Method for installing a coalescence filter element in an aerosol separator (100) designed for separating aerosol particles from gas, wherein
- the coalescence filter element (10) is introduced into a housing (30) of the aerosol separator (100) through a housing opening and
- the coalescence filter element (10) is disposed in the flow path between a raw gas inlet (20) and a clean gas outlet (81, 82),
**characterized in that**
when introducing the coalescence filter element (10) into the housing (30)
- the coalescence filter element (10) is placed on a contact surface (42) of a drawer element (40) movably mounted in the housing, and
- the drawer element (40) is moved in such a way that the coalescence filter element (10) is moved by the movement of the drawer element (40) from a maintenance position of the aerosol separator (100), in which the coalescence filter element (10) is extractable from the housing (30), into a position of use of the aerosol separator (100), in which the coalescence filter element (10) is slip-resistant and tightly tensioned in the housing (30),
- the drawer element (40) is guided both in at least one horizontal direction (X) disposed perpendicularly to the housing axis and simultaneously in at least one axial direction (Y) disposed parallel to the housing axis,
- wherein, when the coalescence filter element (10) is inserted into the housing (30), the housing opening is closed by a cover (32), and wherein, when the cover (32) is closed, it presses against the drawer element (40) in such a way that the drawer element (40) moves the coalescence filter element (10) into its position of use,
- wherein the cover (32) is a door pivotally mounted on the housing (30); and **in that** the drawer element (40) cooperates with the door (32) in such a way that by opening the door (32) the contact surface (42) is movable into the maintenance position and by closing the door (32) the contact surface (42) is movable into the position of use.

13. Method according to claim 12, **characterized in that** the drawer element (40) moves the coalescence filter element (10) in its position of use by using a ramp axial movement.

14. Method according to claim 12 or 13, **characterized in that** when the cover (32) is closed, the coalescence filter element (10) is axially tensioned in the housing in a sealing manner.

15. Method according to at least one of the claims 12 to 14, **characterized in that,** before the coalescence filter element (10) is placed on the drawer element (40), a preliminary separator element designed as a prefilter is disposed on the drawer element (40) so that, when closing the cover (32), the drawer element (40) supports both the preliminary separator element and the coalescence filter element (10).

## Revendications

1. Séparateur d'aérosol (100) destiné à séparer des particules d'aérosol d'un gaz, dans lequel le séparateur d'aérosol (100) présente un boîtier (30) ayant une ouverture de boîtier et un couvercle (32) configuré pour fermer l'ouverture de boîtier, dans lequel au moins un élément filtrant à coalescence (10) peut être introduit dans le boîtier (30) et retiré du boîtier (30) par l'ouverture de boîtier, dans lequel le séparateur d'aérosol (100) présente une surface d'appui (42) pour l'élément filtrant à coalescence (10) et dans lequel l'élément filtrant à coalescence (10) est, dans une position d'utilisation du séparateur d'aérosol (100), serré dans le boîtier (30) de manière à ne pas glisser et, dans une position d'entretien du séparateur d'aérosol (100), disposé de manière non fixe dans le boîtier de sorte que l'élément filtrant à coalescence (10) peut être retiré du boîtier (30),
**caractérisé en ce que**
- la surface d'appui (42) est assignée à un élément de tiroir (40),
- le séparateur d'aérosol (100) présente au moins un moyen de déplacement (44) conçu pour loger l'élément de tiroir (40) de manière mobile dans le boîtier (30),
- le séparateur d'aérosol (100) présente au moins un élément de guidage (52) pour guider le mouvement de l'élément de tiroir (40), et
- le moyen de déplacement (44) et l'élément de guidage (52) coopèrent tellement que l'élément filtrant à coalescence (10) peut être déplacé par le mouvement de l'élément de tiroir (40) de la position d'entretien à la position d'utilisation, en étant serré de manière étanche dans le boîtier (30), et peut être déplacé de la position d'utilisation à la position d'entretien,
- dans lequel l'élément de guidage (52) est conçu pour guider l'élément de tiroir (40) à la fois dans au moins une direction horizontale (X) disposée perpendiculairement à l'axe du boîtier, et simultanément dans au moins une direction axiale (Y) disposée parallèlement à l'axe du boîtier ; et
**caractérisé en ce que** le couvercle (32) est une porte montée de manière pivotante sur le boîtier (30) ; et **en ce que** l'élément de tiroir (40) coopère avec la porte (32) tellement qu'en ouvrant la porte (32), la surface d'appui (42) peut être déplacée dans la position d'entretien et qu'en fermant la porte (32), la surface d'appui (42) peut être déplacée dans la position d'utilisation.

2. Séparateur d'aérosol selon la revendication 1, **caractérisé en ce que**
- en position ouverte de l'ouverture de boîtier l'élément de tiroir (40) s'étend à travers l'ouverture de boîtier et fait saillie dans certaines sections du boîtier (30),
- l'élément de guidage (52) présente au moins un contour de rampe, et
- le couvercle (32), l'élément de tiroir (40) et le contour de rampe (52) sont conçus pour coopérer de telle sorte que, lors de la fermeture du couvercle (32), celui-ci (32) appuie contre l'élément de tiroir (40), dans lequel la pression exercée par le couvercle (32) permet à l'élément de tiroir (40) de se déplacer complètement à l'intérieur du boîtier, l'élément filtrant à coalescence (10) pouvant alors être déplacé dans la position d'utilisation au moyen d'un mouvement axial en rampe.

3. Séparateur d'aérosol selon au moins l'une quelconque des revendications 1 ou 2, **caractérisé par**
- une entrée de gaz brut (20) pour l'admission de gaz brut chargé de particules d'aérosol, notamment d'air ambiant aspiré hors de la chambre de traitement, et une sortie de gaz pur (81, 82) pour l'évacuation de gaz purifié par le séparateur d'aérosol (100), notamment d'air pur,
dans lequel l'élément filtrant à coalescence est disposé dans le trajet d'écoulement entre l'entrée de gaz brut (20) et la sortie de gaz pur (81, 82), et
- un support (62) disposé dans le trajet d'écoulement en aval de l'élément filtrant à coalescence (10), pouvant être déplacé dans sa position axiale et conçu pour porter au moins un élément de séparation secondaire (60),
dans lequel le support (62), l'élément filtrant à coalescence (10) et l'élément de tiroir (40) sont conçus de manière à ce que le support (62) est déplaçable dans sa position axiale en fonction du mouvement de l'élément de tiroir (40).

4. Séparateur d'aérosol selon la revendication 3, **caractérisé par** un élément d'étanchéité filtrant à coalescence (14) disposé entre le support (62) et l'élément filtrant à coalescence (10) pour séparer le côté brut du côté pur, dans lequel l'élément filtrant à coalescence (14), dans la position d'utilisation du séparateur d'aérosol (100), est disposé de manière étanche entre l'élément filtrant à coalescence (10) et le support (62), notamment comprimé ou serré.

5. Séparateur d'aérosol selon la revendication 3 ou 4, **caractérisé en ce qu'**
- un élément de séparation secondaire (60) disposé dans le trajet d'écoulement en aval du support (62) et conçu pour séparer les particules les plus fines telles que la fumée, les bactéries, les pollens et les spores du gaz, notamment des filtres fins ou des filtres pour matières en suspension dans l'air de la classe de filtration H13 (HEPA) selon DIN-EN 1822, et
- une surface d'étanchéité (34) disposée dans le trajet d'écoulement en aval de l'élément de séparation secondaire (60), attachée au boîtier (30) ou réalisée d'un seul tenant avec le boîtier (30),
dans lequel l'élément de séparation secondaire (60), dans la position d'utilisation du séparateur d'aérosol (100), est disposé de manière étanche entre la surface d'étanchéité (34) du boîtier (30) et le support (62), notamment comprimé ou serré.

6. Séparateur d'aérosol selon au moins l'une quelconque des revendications 1 à 5, **caractérisé en ce que** l'élément filtrant à coalescence (10) est conçu en tant qu'élément de séparation principal.

7. Séparateur d'aérosol selon au moins l'une quelconque des revendications 1 à 6, **caractérisé en ce que** l'élément de tiroir (40) porte l'élément filtrant à coalescence (10) et au moins un élément de séparation préliminaire conçu pour séparer les grosses particules de saleté.

8. Séparateur d'aérosol selon au moins l'une quelconque des revendications 1 à 7, dans lequel la porte (32) est configurée pour servir de surface de dépôt pour l'élément filtrant à coalescence (10) dans sa position complètement ouverte.

9. Séparateur d'aérosol selon au moins l'une quelconque des revendications 1 à 8, **caractérisé en ce que** l'élément de guidage (52) est conçu en forme d'arc, notamment comme un rail à courbure spatiale.

10. Séparateur d'aérosol selon au moins l'une quelconque des revendications 1 à 9, **caractérisé en ce que** le moyen de déplacement (44) est disposé sur l'élément de tiroir (40).

11. Machine de fabrication commandée par un procédé électronique, comprenant un séparateur d'aérosol selon au moins l'une quelconque des revendications 1 à 10.

12. Procédé pour installer un élément filtrant à coalescence dans un séparateur d'aérosol (100) conçu pour séparer des particules d'aérosol du gaz, dans lequel
- l'élément filtrant à coalescence (10) est introduit dans un boîtier (30) du séparateur d'aérosol (100) par une ouverture de boîtier et
- l'élément filtrant à coalescence (10) est disposé dans le trajet d'écoulement entre une entrée de gaz brut (20) et une sortie de gaz pur (81, 82),
**caractérisé en ce que**
lors de l'introduction de l'élément filtrant à coalescence (10) dans le boîtier (30)
- l'élément filtrant à coalescence (10) est placé sur une surface d'appui (42) d'un élément de tiroir (40) monté de manière mobile dans le boîtier, et
- l'élément de tiroir (40) est mû de telle sorte que l'élément filtrant à coalescence (10) est mû par le mouvement de l'élément de tiroir (40) d'une position d'entretien du séparateur d'aérosol (100), dans laquelle l'élément filtrant à coalescence (10) peut être retiré du boîtier (30), à une position d'utilisation du séparateur d'aérosols (100), dans laquelle l'élément filtrant à coalescence (10) est serré dans le boîtier (30) de manière à ne pas glisser et à être étanche,
- l'élément de tiroir (40) est guidé à la fois dans au moins une direction horizontale (X) disposée perpendiculairement à l'axe du boîtier, et simultanément dans au moins une direction axiale (Y) disposée parallèlement à l'axe du boîtier,
- dans lequel, lors de l'introduction de l'élément filtrant à coalescence (10) dans le boîtier (30), l'ouverture du boîtier est fermée par un couvercle (32), et dans lequel, lors de la fermeture du couvercle (32), celui-ci est pressé contre l'élément de tiroir (40) de telle sorte que l'élément de tiroir (40) déplace l'élément filtrant à coalescence (10) dans sa position d'utilisation,
- dans lequel le couvercle (32) est une porte montée de manière pivotante sur le boîtier (30) ; et **en ce que** l'élément de tiroir (40) coopère avec la porte (32) tellement qu'en ouvrant la porte (32), la surface d'appui (42) peut être déplacée dans la position d'entretien et qu'en fermant la porte (32), la surface d'appui (42) peut être déplacée dans la position d'utilisation.

13. Procédé selon la revendication 12, **caractérisé en ce que** l'élément de tiroir (40) déplace l'élément filtrant à coalescence (10) dans sa position d'utilisation par un mouvement axial en rampe.

14. Procédé selon la revendication 12 ou 13, **caractérisé en ce que** lors de la fermeture du couvercle (32), l'élément filtrant à coalescence (10) est serré axialement de manière étanche dans le boîtier.

15. Procédé selon au moins l'une quelconque des revendications 12 à 14, **caractérisé en ce qu'**avant que l'élément filtrant à coalescence (10) est posé sur l'élément de tiroir (40), un élément de séparation préliminaire conçu en tant que préfiltre est disposé sur l'élément de tiroir (40), de sorte que lors de la fermeture du couvercle (32), l'élément de tiroir (40) porte à la fois l'élément de séparation préliminaire et l'élément filtrant à coalescence (10).
